# EUROPÄISCHE PATENTSCHRIFT

(11) **EP 1 944 479 B1**
(45) Veröffentlichungstag und Bekanntmachung des Hinweises auf die Patenterteilung: **13.05.2009**
(21) Anmeldenummer: 08000003.7
(22) Anmeldetag: 02.01.2008
(51) Int. Cl.: F01N 3/20

(54) **Thermolysereaktor**
Thermolysis reactor
Réacteur à thermolyse

(30) Priorität: 09.01.2007 DE 102007001396
(43) Veröffentlichungstag der Anmeldung: 16.07.2008
(73) Patentinhaber: Pierburg GmbH, 41460 Neuss (DE)
(72) Erfinder: Tönnesmann, Andres, 52062 Aachen (DE); Köster, Andreas, 45149 Essen (DE); Nigrin, Sven, 40468 Düsseldorf (DE); Dismon, Heinrich, 52538 Gangelt (DE)
(74) Vertreter: Ter Smitten, Hans

(56) Entgegenhaltungen:
- EP-A- 1 338 562
- EP-A- 1 481 719
- EP-A- 1 715 151
- DE-U1-5202006 010 61

## Beschreibung

Die Erfindung betrifft einen Thermolysereaktor zur thermisch aktivierten Zersetzung eines Feststoffes, beispielsweise von trockenem Harnstoff, zu Ammoniak und gegebenenfalls weiteren Thermolyseprodukten.

Zur Reduzierung von Stickoxiden im Abgasstrom, beispielsweise einer Brennkraftmaschine, werden SCR-Katalysatoren verwendet (selective catalytic reduction/ selektive katalytische Reduktion). Dabei wird Ammoniak (NH₃) in den Abgasstrom der Brennkraftmaschine eingespeist und wirkt als Reduktionsmittel für die im Abgasstrom enthaltenen Stickoxide, so dass im SCR-Katalysator die selektive katalytische Reduktion der Stickoxide stattfinden kann.

Zur Gewinnung von Ammoniak ist es bekannt, flüssigen oder trockenen Harnstoff zu verwenden. Bei der Gewinnung von Ammoniak aus trockenem Harnstoff muss dieser aus einer Bevorratung in geregelter Menge einem Thermolysereaktor zugeführt werden, in dem der Harnstoff durch Thermolyse in Ammoniak und Isocyansäure (HNCO) gespalten wird. Die entstandene Isocyansäure kann in einem weiteren Schritt durch Hydrolyse ebenfalls in Ammoniak umgewandelt werden. Das so gewonnene Ammoniak wird anschließend als Reduktionsmittel dem SCR-Katalysator zugeführt. Gegebenenfalls können dem SCR-Katalysator das Ammoniak und die Isocyansäure direkt zugeführt werden.

Zur thermolytischen Gewinnung von Ammoniak aus trockenem Harnstoff ist es notwendig, den trockenen Harnstoff durch eine Heizvorrichtung zu erhitzen. Der trockene Harnstoff weist üblicherweise die Form von Pellets auf und wird einer Heizvorrichtung zugeführt, die beispielsweise die Form einer Metallspirale aufweist. Diese Metallspirale besteht aus einem gewickelten Band als einzelnem stromführenden Leiter mit zwei elektrischen Polen. Dabei ist der erste elektrische Pol im Mittelpunkt der Spirale und der zweite elektrische Pol an einem Punkt entlang des Umfangs der Spirale angeordnet.

Wird dem Heizdraht elektrischer Strom zugeführt, heizt sich dieser aufgrund seines elektrischen Widerstandes auf und verursacht somit die Thermolyse des ihm zugeführten Harnstoffpellets. Dabei kann das Harnstoffpellet zur besseren Wärmeaufnahme durch die einzelnen Wicklungen der Heizspirale hindurchgeführt werden.

Heizvorrichtungen gemäß dem bekannten Stand der Technik weisen üblicherweise ein Material mit keinem oder nur sehr gering positivem Widerstandstemperaturkoeffizienten auf. Dadurch wird erreicht, dass an jeder Stelle des Leiters annähernd die gleiche thermische Leistung pro Leiterlänge generiert wird.

Der Widerstandstemperaturkoeffizient gibt an, um wie viel sich der elektrische Widerstand eines Materials bei einem Temperaturanstieg ändert. Insbesondere beschreibt der lineare Widerstandstemperaturkoeffizient α die Änderung des spezifischen Widerstandes eines Materials bezüglich des Wertes bei einer Referenztemperatur T₀ (üblicherweise T₀ = 20°C) innerhalb eines begrenzten Temperaturbereichs in der Einheit 1/°C gemäß der Formel R(T) = R(T₀)· (1+αT).

Wird einer Heizvorrichtung ein Harnstoffpellet zugeführt, kommt dieses nur mit einem relativ kleinen Bereich der Heizvorrichtung in Berührung. An diesem Bereich gibt die Heizvorrichtung ihre Wärme an das Harnstoffpellet ab, so dass eine Thermolyse stattfinden kann. Entsprechend wird die Heizvorrichtung in diesem Bereich durch die abgegebene Wärme besonders stark abgekühlt.

Zur thermolytischen Gewinnung von Ammoniak aus trockenem Harnstoff ist es notwendig, den trockenen Harnstoff durch eine Heizvorrichtung zu erhitzen. Der trockene Harnstoff weist üblicherweise die Form von Pellets auf und wird einer Heizvorrichtung zugeführt, die beispielsweise die Form einer Metallspirale aufweist. Diese Metallspirale besteht aus einem gewickelten Band als einzelnem stromführenden Leiter mit zwei elektrischen Polen. Dabei ist der erste elektrische Pol im Mittelpunkt der Spirale und der zweite elektrische Pol an einem Punkt entlang des Umfangs der Spirale angeordnet. Derartige Heizvorrichtungen sind beispielsweise aus der EP 1 715 151 A1 oder der EP 1 338 562 A1 bekannt.

Wird dem Heizdraht elektrischer Strom zugeführt, heizt sich dieser aufgrund seines elektrischen Widerstandes auf und verursacht somit die Thermolyse des ihm zugeführten Harnstoffpellets. Dabei kann das Harnstoffpellet zur besseren Wärmeaufnahme durch die einzelnen Wicklungen der Heizspirale hindurchgeführt werden.

Heizvorrichtungen gemäß dem bekannten Stand der Technik weisen üblicherweise ein Material mit keinem oder nur sehr gering positivem Widerstandstemperaturkoeffizienten auf. Dadurch wird erreicht, dass an jeder Stelle des Leiters annähernd die gleiche thermische Leistung pro Leiterlänge generiert wird.

Der Widerstandstemperaturkoeffizient gibt an, um wie viel sich der elektrische Widerstand eines Materials bei einem Temperaturanstieg ändert. Insbesondere beschreibt der lineare Widerstandstemperaturkoeffizient α die Änderung des spezifischen Widerstandes eines Materials bezüglich des Wertes bei einer Referenztemperatur T₀ (üblicherweise T₀ = 20°C) innerhalb eines begrenzten Temperaturbereichs in der Einheit 1/°C gemäß der Formel R(T) = R(T₀) · (1+αT).

Bekannt sind auch Heizelemente zum Erwärmen von Flüssigharnstofflösungen mit Heizelementen mit positivem Widerstandskoeffizienten, welche genutzt werden, um ein Überhitzen der gesamten Heizelemente zu verhindern. Derartige Heizelemente werden in der DE 20 2006 010 615 U1 oder der EP 1 481 719 A2 beschrieben.

Nicht gelöst wurde bislang das Problem, dass wenn einer Heizvorrichtung ein Harnstoffpellet zugeführt wird, dieses nur mit einem relativ kleinen Bereich der Heizvorrichtung in Berührung kommt. An diesem Bereich gibt die Heizvorrichtung ihre Wärme an das Harnstoffpellet ab, so dass eine Thermolyse stattfinden kann. Entsprechend wird die Heizvorrichtung in diesem Bereich durch die abgegebene Wärme besonders stark abgekühlt. Auch wenn ein Material mit positivem Widerstandskoeffizienten verwendet wird, so verringert sich der Widerstand des Materials insgesamt nur gering, so dass ein Temperaturausgleich der betroffenen Stelle relativ viel Zeit in Anspruch nimmt.

Bekannte Heizvorrichtungen weisen den Nachteil auf, dass sich diese erkalteten Bereiche erst langsam wieder aufheizen können. Selbst wenn eine lokale Abkühlung der Leiterwicklung, ausgehend von einem gering positiven Widerstandstemperaturkoeffizienten, zu einer Widerstandsminderung eines einzelnen Leiterabschnitts führen würde, ändert dies den Gesamtwiderstand der Heizvorrichtung und damit den Stromfluss nicht nennenswert. Ein Temperaturausgleich in dem erkalteten Bereich kann somit im Wesentlichen nur durch Wärmeleitung im Heizermaterial stattfinden. Es dauert daher entsprechend lange bis ein abgekühlter Bereich wieder seine ursprüngliche Betriebstemperatur erreicht hat. Ein langsamer Temperaturausgleich in einem erkalteten Bereich der Heizvorrichtung hat zur Folge, dass die Thermolyse in diesem Bereich der Heizvorrichtung nicht mehr zuverlässig durchgeführt werden kann, solange dieser Bereich nicht seine ursprüngliche Temperatur erreicht hat.

Ein weiterer Nachteil bekannter Heizvorrichtungen besteht darin, dass sich sogenannte Hot-Spots bilden können, d. h. Leiterabschnitte, in denen sich der sogenannte Widerstand und damit die thermische Leistung und die Temperatur aufgrund von Materialinhomogenitäten lokal erhöhen. In ungünstigen Fällen kann sich an solchen Stellen eine selbstverstärkende Materialdegradiation einstellen, die langfristig zu einem Ausfall der gesamten Heizvorrichtung führt.

Aufgabe der Erfindung ist es, eine Vorrichtung zur thermisch aktivierten Zersetzung eines Feststoffes, insbesondere von trockenem Harnstoff, zu Ammoniak und weiteren Thermolyseprodukten zu schaffen, die eine zuverlässigere Funktion gewährleistet.

Die Lösung der Aufgabe erfolgt durch die Merkmale des Anspruchs 1.

Ein Thermolysereaktor zur thermisch aktivierten Zersetzung von Feststoff, insbesondere von trockenem Harnstoff, zu Ammoniak und weiteren Thermolyseprodukten weist eine elektrisch betriebene Heizvorrichtung auf. Die Heizvorrichtung weist ein Material mit positivem Widerstandstemperaturkoeffizienten auf. Weiterhin weist die Heizvorrichtung eine erste und eine zweite Seite sowie mehrere elektrisch parallel zueinander geschaltete Heizelemente auf. Die erste Seite der Heizvorrichtung kann beispielsweise die Seite sein, an der der Heizvorrichtung der trockene Harnstoff zugeführt wird. Die zweite Seite der Heizvorrichtung bezieht sich dann auf die Seite, an der die Heizvorrichtung die Thermolyseprodukte abgibt. Die Heizelemente erstrecken sich von der ersten zur zweiten Seite der Heizvorrichtung. Dabei sind die Heizelemente an der ersten Seite der Heizvorrichtung mit dem elektrischen Pluspol und an der zweiten Seite der Heizvorrichtung mit dem elektrischen Minuspol verbunden. Es existieren somit mehrere Heizelemente, die insbesondere gesondert elektrisch gespeist sein können.

Im Folgengen wird die Erfindung anhand eines Thermolysereaktors zur thermisch aktivierten Zersetzung von trockenem Harnstoff näher erläutert. Ein erfindungsgemäßer Thermolysereaktor zur thermisch aktivierten Zersetzung eines anders gearteten Feststoffes kann sämtliche beschriebenen Merkmale eines Thermolysereaktors zur thermisch aktivierten Zersetzung von trockenem Harnstoff aufweisen.

Wird dem erfindungsgemäßen Thermolysereaktor trockener Harnstoff, beispielsweise in Form eines Harnstoffpellets zugeführt, gibt dieser zur Durchführung der Thermolyse seine Wärmeenergie an das Harnstoffpellet ab. Erfindungsgemäß kann die damit verbundene Erkaltung der Heizvorrichtung besonders schnell ausgeglichen werden, da die Heizvorrichtung ein Material mit positivem Widerstandstemperaturkoeffizienten aufweist. Besonders vorteilhaft ist die elektrische Parallelschaltung der Heizelemente, so dass die Heizelemente, an denen die Abgabe von Wärme stattgefunden hat, durch ihren positiven Widerstandstemperaturkoeffizienten von einem größeren Strom durchflossen werden, ohne dass an den übrigen Heizelementen ein vermehrter Stromfluss auftritt. Es kann somit gezielt an der Stelle der Heizvorrichtung, an der die Abgabe von Wärme stattgefunden hat, ein besonders schneller Temperaturausgleich herbeigeführt werden. Es kommt zu einer verbesserten Homogenisierung der Temperaturverteilung in der Heizvorrichtung, da die Stromdichte und damit die Wärmeerzeugung in den abgekühlten Bereichen lokal ansteigen. Umgekehrt mindert dieser Effekt ebenso die Entstehung von dauerhaften Hot-Spots, die zu einer Zerstörung eines Heizelementes führen können.

Der erfindungsgemäße Thermolysereaktor weist somit eine Selbstregulierungsfunktion und damit eine erhöhte Zuverlässigkeit auf. Weiterhin bietet der erfindungsgemäße Thermolysereaktor eine größere Freiheit bei der konstruktiven Gestaltung der Heizvorrichtung im Vergleich zu bekannten Ein-Leiter-Heizvorrichtungen.

In einer bevorzugten Ausführungsform des Thermolysereaktors sind mehrere elektrisch parallel zueinander geschaltete Heizelemente zu einer Heizelementgruppe zusammengefasst. Die Heizelementgruppe kann sich in einer Richtung senkrecht zu den Heizelementen erstrecken. Eine Heizelementgruppe kann einzelne Heizelemente aufweisen, oder aber als einstückige Heizelementplatte ausgebildet sein. Einzelne Heizelemente können dabei thermisch und elektrisch voneinander isoliert sein. Dagegen können die Heizelemente einer Heizelementgruppe thermisch und elektrisch unmittelbar miteinander verbunden sein. Dies bietet den Vorteil, dass zusätzlich zu dem lokal verstärkten Stromfluss an einer erkalteten Stelle ein Wärmeausgleich stattfinden kann, da die erkaltete Stelle thermisch mit benachbarten Heizelementen verbunden ist. Die elektrische Verbindung der erkalteten Stelle mit benachbarten Heizelementen bewirkt weiterhin einen zusätzlich vermehrten Stromfluss über die erkaltete Stelle, da diese durch ihren positiven Widerstandstemperaturkoeffizienten einen zu diesem Zeitpunkt besonders niedrigen elektrischen Widerstand aufweist, so dass der elektrische Strom, der im Normalfall über die benachbarten Heizelemente geleitet würde, dem geringeren elektrischen Widerstand über die erkaltete Stelle folgt. Somit kann an der erkalteten Stelle besonders effizient ein schneller Temperaturausgleich erzielt werden.

Weiterhin ist es möglich, dass nur ein Teil des Thermolysereaktors, beispielsweise die Heizelemente oder die Heizelementgruppe, ein Material mit positivem Widerstandstemperaturkoeffizienten aufweist.

Besonders bevorzugt weist der Thermolysereaktor eine Fördervorrichtung zum Fördern eines Fluids auf, durch das die Thermolyseprodukte über die Abführausnehmungen aus der Heizvorrichtung austreibbar sind. Die Fördervorrichtung kann beispielsweise eine Gebläsevorrichtung aufweisen, die ein vorgeheiztes Fluid, insbesondere Förderluft, fördert, das die Thermolyseprodukte nach der Zersetzung über die Abführausnehmungen austreibt.

Zur Beschleunigung der Zersetzungsreaktion kann die beheizte Oberfläche der Heizvorrichtung ein katalytisch wirksames Material aufweisen. Ebenso kann die Heizvorrichtung weitere Beschichtungen oder Ummantelungen aufweisen, um die chemische und mechanische Beständigkeit der Heizvorrichtung zu erhöhen.

Insbesondere ist die Temperatur der Heizvorrichtung durch das Material mit positivem Widerstandstemperaturkoeffizienten selbsttätig, d. h. ohne einen zusätzlichen Temperaturfühler regelbar. Besonders bevorzugt weist die Heizvorrichtung ein Material mit einem Widerstandskoeffizienten größer als 10⁻³/°C und insbesondere ca. 5 · 10⁻³/°C (wie etwa bestimmte Nickel-EisenLegierungen) auf. Ein solches Material weist bei 400°C etwa einen doppelt so großen elektrischen Widerstand wie bei 133°C, was etwa der Schmelztemperatur von Harnstoff entspricht, auf.

Im folgenden wird eine bevorzugte Ausführungsform der Erfindung anhand einer Figur erläutert.

Es zeigen:

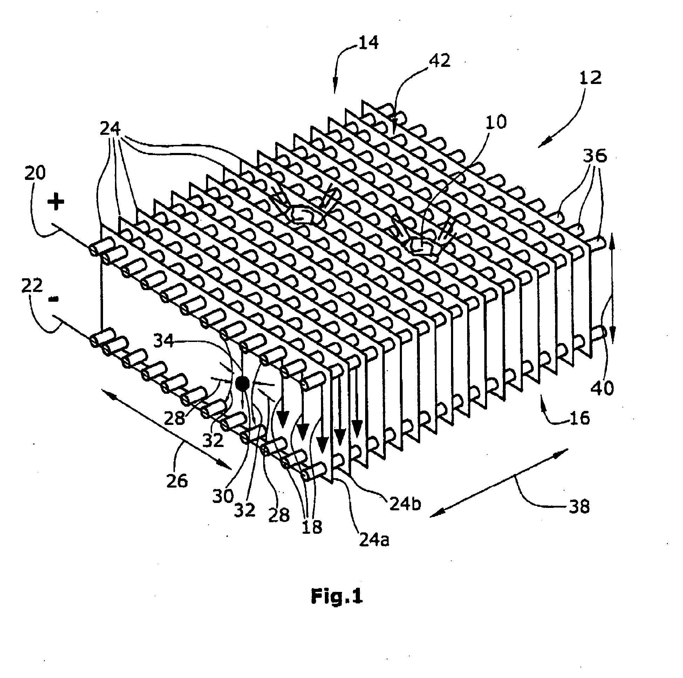

- Fig. 1:: eine Schrägansicht der erfindungsgemäßen Heizvorrichtung,
- Fig. 2:: eine schematische Ansicht des erfindungsgemäßen Thermolysereaktors und
- Fig.3:: eine schematische Ansicht einer zweiten Ausführungsform des erfindungsgemäßen Thermolysereaktors.

Ein Thermolysereaktor zur thermisch aktivierten Zersetzung von trockenem Harnstoff 10 zu Ammoniak und weiteren Thermolyseprodukten weist eine elektrisch betriebene Heizvorrichtung 12 auf. Die Heizvorrichtung 12 weist eine Nickel-Eisen-Legierung mit einem Widerstandstemperaturkoeffizienten von 5 · 10⁻³/°C auf. Die Heizvorrichtung weist eine erste 14 und eine zweite Seite 16 sowie mehrere elektrisch parallel zueinander geschaltete Heizelemente 18 auf, die sich von der ersten 14 zur zweiten Seite 16 der Heizvorrichtung 12 erstrecken. Dabei sind die Heizelemente 18 an der ersten Seite 14 der Heizvorrichtung 12 mit dem elektrischen Pluspol 20 und an der zweiten Seite 16 der Heizvorrichtung 12 mit dem elektrischen Minuspol 22 verbunden. Eine umgekehrte Anordnung der elektrischen Pole ist ebenfalls möglich.

Mehrere elektrisch parallel zueinander geschaltete Heizelemente 18 bilden zusammen eine Heizelementgruppe 24. Die Heizvorrichtung 12 weist mehrere parallel zueinander angeordnete Heizelementgruppen 24 auf, wobei jede Heizelementgruppe 24 mehrere elektrisch parallel zueinander geschaltete Heizelemente 18 umfasst. Die Heizelementgruppen 24 erstrecken sich in einer Richtung 26 senkrecht zu den Heizelementen 18.

Die Heizvorrichtung weist in Blattrichtung von oben betrachtet eine gitterförmige Struktur auf.

In der dargestellten Ausführungsform sind die Heizelementgruppen 24 als einstückige Heizelementplatten 24 ausgebildet. Dabei sind die Heizelemente 18 einer Heizelementplatte 24 thermisch und elektrisch unmittelbar miteinander verbunden. Durch die thermische Verbindung kann ein Wärmeaustausch in Richtung der Pfeile 28 stattfinden. Befindet sich somit innerhalb der Heizvorrichtung 12 in der Nähe des Punktes 30 ein Harnstoffpellet 10, findet in der Nähe des Punktes 30 in der ersten Heizelementplatte 24a und in der zweiten Heizelementplatte 24b eine vermehrte Abgabe von Wärme statt. Durch die Wärmeleitung entlang der Pfeile 28 kann die abgegebene Wärme besonders schnell kompensiert werden.

Durch die elektrische Verbindung der Heizelemente 18 einer Heizelementgruppe 24 findet zusätzlich eine Stromführung entlang der Pfeile 32 statt. Die Stromführung an einer nicht erkalteten Stelle würde parallel zum Pfeil 34 stattfinden. Durch den positiven Widerstandstemperaturkoeffizienten der Heizelementplatte 24 verringert sich der Widerstand an der erkalteten Stelle 30.

Somit weisen benachbarte Stellen der Heizelementplatte 24 einen höheren Widerstand auf als der Punkt 30. Der elektrische Strom, der normalerweise über diese benachbarten Stellen verlaufen würde, nimmt somit den Weg über die erkaltete Stelle 30, was ebenfalls zu einem schnelleren Temperaturausgleich beiträgt.

Die Heizvorrichtung 12 weist mehrere parallel zueinander angeordnete elektrische Leiter 36 auf, die sich in einer dritten Richtung 38 senkrecht zu einer zweiten Erstreckungsrichtung 26 der Heizelementplatten 24 und senkrecht zu einer ersten Richtung 40 der Heizelemente 18 erstrecken. Durch die elektrischen Leiter 36 sind die mehreren parallel zueinander angeordneten Heizelementplatten 24 elektrisch miteinander verbunden.

Die Heizvorrichtung 12 weist an der ersten Seite 14 eine Vielzahl von Zuführausnehmungen 42 zum Zuführen von trockenem Harnstoff 10, insbesondere in Form von Harnstoffpellets, auf. Die Zuführausnehmungen 42 erstrecken sich bis zur zweiten Seite 16 der Heizvorrichtung 12. Auf der zweiten Seite 16 weist die Heizvorrichtung 12 nicht sichtbare Abführausnehmungen zum Abführen von Ammoniak sowie weiteren Thermolyseprodukten auf. Die Abführausnehmungen sind mit den Zuführausnehmungen 42 verbunden.

Zur Durchführung der Thermolyse wird der Heizvorrichtung 12 über eine oder mehrere Zuführausnehmungen 42 ein Harnstoffpellet 10 zugeführt. Dieses wird durch die abgegebene Wärme der Heizvorrichtung 12 erwärmt, so dass eine Thermolyse des trockenen Harnstoffs 10 in Ammoniak und Isocyansäure stattfinden kann. Diese beiden Thermolyseprodukte werden über die nicht dargestellten Abführausnehmungen abgeführt. Dies kann beispielsweise durch ein nicht dargestelltes Gebläse stattfinden, das in Blattrichtung oberhalb der Heizvorrichtung angeordnet ist.

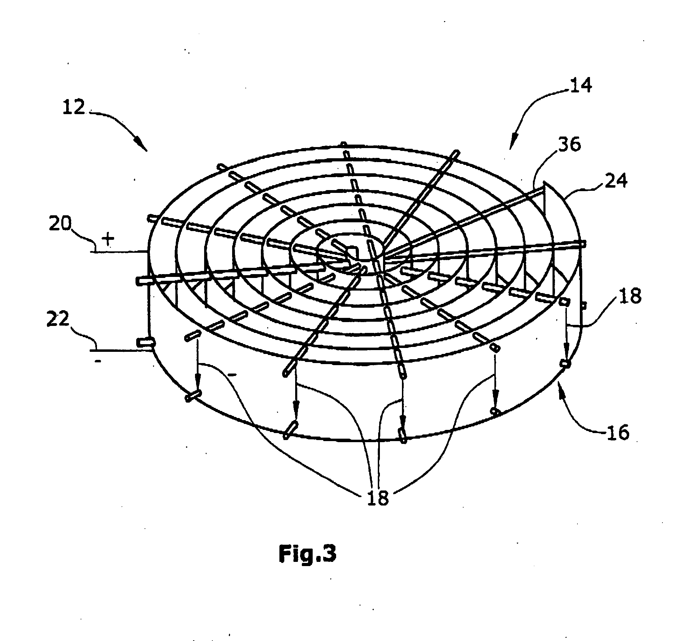

Fig. 3 zeigt eine alternative Ausführungsform des erfindungsgemäßen Thermolysereaktors. Eine elektrisch betriebene Heizvorrichtung 12 weist ebenfalls eine erste 14 und eine zweite Seite 16 sowie mehrere elektrisch parallel zueinander geschaltete Heizelemente 18 auf. Diese erstrecken sich von der ersten 14 zur zweiten Seite 16 der Heizvorrichtung 12. An der ersten Seite 14 der Heizvorrichtung 12 sind die Heizelemente 18 mit dem elektrischen Pluspol 20 und an der zweiten Seite 16 der Heizvorrichtung 12 mit dem elektrischen Minuspol 22 verbunden.

Die Heizelemente 18 können sowohl als einzelne Leiter als auch als Heizelementgruppen 24 ausgebildet sein. Die Heizelementgruppen 24 sind im Gegensatz zu der bisher beschriebenen Ausführungsform nicht räumlich parallel zu einander angeordnet, sondern spiralförmig aufgewickelt. Ausgehend vom Mittelpunkt der spiralförmigen Heizvorrichtung 12 verlaufen elektrische Leiter 36, die die einzelnen Wicklungen der Spirale in radialer Richtung mit einander verbinden. Wesentliches Merkmal dieser Ausführungsform ist, dass die Heizelementgruppen 24 derart angeordnet sind, dass kein Feststoff die Heizvorrichtung ungehindert durchfliegen kann. Die spiralförmige Heizvorrichtung 12 kann sämtliche Merkmale der ersten Ausführungsform der Erfindung aufweisen.

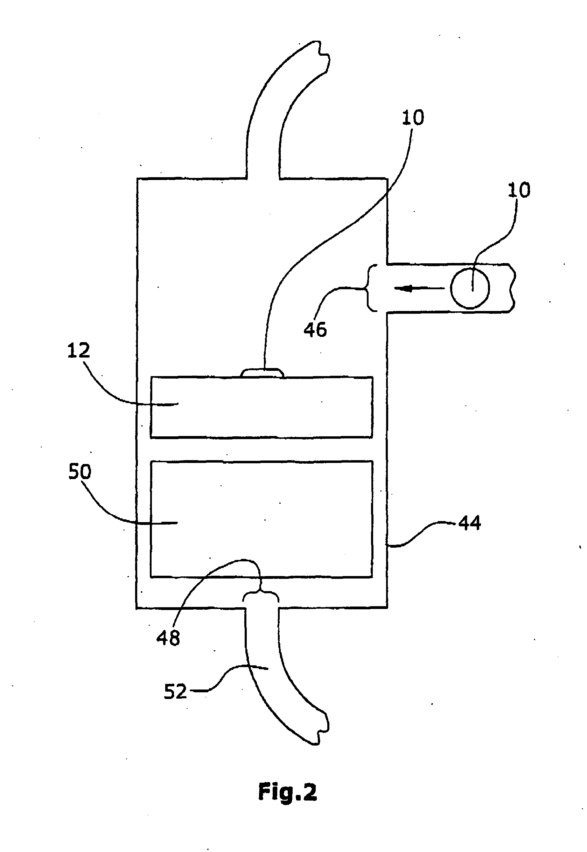

Üblicherweise ist ein Thermolysereaktor gemäß Fig. 2 in einem Gehäuse 44 angeordnet, das eine Zuführöffnung 46 zum Zuführen von trockenem Harnstoff 10 sowie eine Abführöffnung 48 zum Abführen der Thermolyseprodukte aufweist. Gegebenenfalls kann für eine Umwandlung der Isocyansäure in Ammoniak innerhalb dieses Gehäuses zusätzlich ein Hydrolysekatalysator 50 angeordnet sein, so dass eine besonders effiziente Ammoniakgewinnung ermöglicht wird. Das somit gewonnene Ammoniak wird zur selektiven katalytischen Reduktion, zusammen mit dem Abgasstrom über eine Auslassleitung 52 einem nicht dargestellten SCR-Katalysator zugeführt. Dort findet eine Reduktion der im Abgasstrom enthaltenen Stickoxide statt.

## Patentansprüche

1. Thermolysereaktor zur thermisch aktivierten Zersetzung eines Feststoffes, beispielsweise von trockenem Harnstoff (10), zu Ammoniak und weiteren Thermolyseprodukten, mit
einer elektrisch betriebenen Heizvorrichtung (12), die ein Material mit positivem Widerstands-Temperaturkoeffizienten aufweist,
wobei die Heizvorrichtung (12) eine erste (14) und eine zweite Seite (16) sowie mehrere elektrisch parallel zueinander geschaltete Heizelemente (18) aufweist, die sich von der ersten (14) zur zweiten Seite (16) der Heizvorrichtung (12) erstrecken, und
wobei die Heizelemente (18) an der ersten Seite (14) der Heizvorrichtung (12) mit dem elektrischen Pluspol (20) und an der zweiten Seite (16) der Heizvorrichtung (12) mit dem elektrischen Minuspol (22) verbunden sind.

2. Thermolysereaktor nach Anspruch 1 **dadurch gekennzeichnet, dass** mehrere elektrisch parallel zueinander geschaltete Heizelemente (18) eine Heizelementgruppe (24) bilden.

3. Thermolysereaktor nach Anspruch 2 **dadurch gekennzeichnet, dass** sich die Heizelementgruppe (24) in einer zweiten Richtung (26) senkrecht zu einer ersten Erstreckungsrichtung (40) der Heizelemente (18) erstreckt.

4. Thermolysereaktor nach einem der Ansprüche 2 oder 3 **dadurch gekennzeichnet, dass** die Heizvorrichtung (12) mehrere parallel zueinander angeordnete oder geschaltete Heizelementgruppen (24) aufweist, wobei jede Heizelementgruppe (24) mehrere elektrisch parallel zueinander geschaltete Heizelemente (18) umfasst.

5. Thermolysereaktor nach einem der Ansprüche 1 bis 4 **dadurch gekennzeichnet, dass** die Heizvorrichtung (12) eine gitterförmige Struktur aufweist.

6. Thermolysereaktor nach einem der Ansprüche 2 bis 5 **dadurch gekennzeichnet, dass** die Heizelementgruppe (24) als einstückige Heizelementplatte ausgebildet ist.

7. Thermolysereaktor nach einem der Ansprüche 2 bis 6 **dadurch gekennzeichnet, dass** die Heizelemente (18) einer Heizelementgruppe (24) insbesondere unmittelbar thermisch und/ oder elektrisch miteinander verbunden sind.

8. Thermolysereaktor nach einem der Ansprüche 4 bis 7 **dadurch gekennzeichnet, dass** die mehreren, insbesondere parallel zueinander angeordneten Heizelementgruppen (24) elektrisch miteinander verbunden sind.

9. Thermolysereaktor nach einem der Ansprüche 1 bis 8 **dadurch gekennzeichnet, dass** die Heizvorrichtung (12) an der ersten Seite (14) Zuführausnehmungen (42) zum Zuführen von trockenem Harnstoff (10) aufweist, die sich bis zur zweiten Seite (16) der Heizvorrichtung (12) erstrecken.

10. Thermolysereaktor nach einem der Ansprüche 1 bis 9 **dadurch gekennzeichnet, dass** die Heizvorrichtung (12) an der zweiten Seite (16) Abführausnehmungen zum Abführen von Ammoniak sowie weiteren Thermolyseprodukten aufweist, wobei die Abführausnehmungen mit den Zuführausnehmungen (42) verbunden sind.

11. Thermolysereaktor nach einem der Ansprüche 1 bis 10 **gekennzeichnet durch** eine Fördervorrichtung zum Fördern eines Fluids, **durch** das die Thermolyseprodukte über die Abführausnehmungen aus der Heizvorrichtung (12) austreibbar sind.

12. Thermolysereaktor nach einem der Ansprüche 1 bis 11 **dadurch gekennzeichnet, dass** die beheizte Oberfläche der Heizvorrichtung (12) zur Beschleunigung der Zersetzungsreaktion ein katalytisch wirksames Material aufweist.

13. Thermolysereaktor nach einem der Ansprüche 1 bis 12, **dadurch gekennzeichnet, dass** die Heizvorrichtung (12) eine Beschichtung und/ oder Ummantelung zur Erhöhung der chemischen und/ oder mechanischen Beständigkeit der Heizvorrichtung (12) aufweist.

14. Thermolysereaktor nach einem der Ansprüche 2 bis 13 **dadurch gekennzeichnet, dass** die Heizvorrichtung (12) elektrische Leiter (36) aufweist, die sich in einer dritten Richtung (38) senkrecht zur zweiten Erstreckungsrichtung (26) der Heizelementgruppen (24) und senkrecht zur ersten Richtung (40) der Heizelemente (18) erstrecken.

15. Thermolysereaktor nach einem der Ansprüche 1 bis 14 **gekennzeichnet durch** ein Gehäuse (44), das eine Zuführöffnung (46) zum Zuführen eines Feststoffes (10) sowie eine Abführöffnung (48) zum Abführen der Thermolyseprodukte aufweist.

16. Thermolysereaktor nach Anspruch 2, **dadurch gekennzeichnet, dass** die elektrisch parallel zu einander geschalteten Heizelemente (18) durch eine spiralförmig ausgebildete Heizelementgruppe (24) gebildet sind.

## Claims

1. A thermolysis reactor for the thermally activated decomposition of a solid agent, for example, dry urea (10), into ammonia and other thermolysis products, comprising
an electrically operated heating device (12) comprising a material with a positive resistance-temperature coefficient,
said heating device (12) having a first (14) and a second side (16), as well as a plurality of electrically parallel connected heating elements (18) extending from the first (14) to the second side (16) of the heating device (12), and
said heating elements (18) at the first side (14) of the heating device (12) being connected with the positive electric terminal (20) and, at the second side (16) of the heating device (12), with the negative electric terminal (22).

2. The thermolysis reactor of claim 1, **characterized in that** a plurality of electrically parallel connected heating elements (18) form a group (24) of heating elements.

3. The thermolysis reactor of claim 2, **characterized in that** the group (24) of heating elements extends in a second direction (26) perpendicular to a first direction of extension (40) of the heating elements (18).

4. The thermolysis reactor of one of claims 2 or 3, **characterized in that** the heating device (12) comprises a plurality of groups (24) of heating elements arranged or connected in parallel, each group (24) of heating elements comprising a plurality of electrically parallel connected heating elements (18).

5. The thermolysis reactor of one of claims 1 to 4, **characterized in that** the heating device (12) has a grid-shaped structure.

6. The thermolysis reactor of one of claims 2 to 5, **characterized in that** the group (24) of heating elements is formed as an integral heating element plate.

7. The thermolysis reactor of one of claims 2 to 6, **characterized in that** the heating elements (18) of a group (24) of heating elements are connected in particular immediately thermally and/or electrically.

8. The thermolysis reactor of one of claims 4 to 7, **characterized in that** the plurality of groups (24) of heating elements, which are in particular arranged in parallel, are electrically interconnected.

9. The thermolysis reactor of one of claims 1 to 8, **characterized in that**, at the first side (14), the heating device (12) comprises feed recesses (42) for feeding dry urea (10) that extend to the second side (16) of the heating device (12).

10. The thermolysis reactor of one of claims 1 to 9, **characterized in that**, at the second side (16), the heating device (12) comprises discharge recesses for discharging ammonia, as well as other thermolysis products, the discharge recesses being connected with the feed recesses (42).

11. The thermolysis reactor of one of claims 1 to 10, **characterized by** a conveyor device for conveying a fluid by which the thermolysis products can be expelled from the heating device (12) via discharge recesses.

12. The thermolysis reactor of one of claims 1 to 11, **characterized in that** the heated surface of the heating device (12) comprises a catalytically active material to accelerate the decomposition reaction.

13. The thermolysis reactor of one of claims 1 to 12, **characterized in that** the heating device (12) comprises a coating and/or a jacket to increase the chemical and/or mechanical resistance of the heating device (12).

14. The thermolysis reactor of one claims 2 to 13, **characterized in that** the heating device (12) comprises electric conductors (38) extending in a third direction (38) perpendicular to the second direction of extension (26) of the groups (24) of heating elements and perpendicular to the first direction (40) of the heating elements (18).

15. The thermolysis reactor of one of claims 1 to 14, **characterized by** a housing (44) comprising a feed opening (46) for feeding a solid agent (10), as well as a discharge opening (48) for discharging the thermolysis products.

16. The thermolysis reactor of claim 2, **characterized in that** the electrically parallel connected heating elements (18) are formed by a spiral-shaped group (24) of heating elements.

## Revendications

1. Réacteur de thermolyse pour la dissociation, activée thermiquement, d'une matière solide, par exemple l'urée sèche (10), en ammoniac et d'autres produits de thermolyse, comprenant
un dispositif de chauffage (12), opéré électriquement, comprenant un matériau avec un coefficient de résistance-température positif,
le dispositif de chauffage (12) comprenant une première côté (14) et une deuxième côté (16) ainsi que plusieurs éléments de chauffage (18) connectés électriquement en parallèle, lesdits éléments s'étendant de la première côté (14) à la deuxième côté (16) du dispositif de chauffage (12), et
les éléments de chauffage (18) étant connectés, à la première côté (14) du dispositif de chauffage (12), au pôle électrique positif (20) et, à la deuxième côté (16) du dispositif de chauffage (12), ils sont connectés au pôle électrique négatif (22).

2. Réacteur de thermolyse selon la revendication 1, **caractérisé en ce que** plusieurs éléments de chauffage (18) connectés électriquement en parallèle forment un groupe d'éléments de chauffage (24).

3. Réacteur de thermolyse selon la revendication 2, **caractérisé en ce que** le groupe d'éléments de chauffage (24) s'étend dans une deuxième direction (26) perpendiculaire à la première direction de projection (40) des éléments de chauffage (18).

4. Réacteur de thermolyse selon la revendication 2 ou 3, **caractérisé en ce que** le dispositif de chauffage (12) comprend plusieurs groupes d'éléments de chauffage (24) arrangés ou connectés en parallèle, chaque groupe d'éléments de chauffage (24) comprenant plusieurs éléments de chauffage (18) connectés électriquement en parallèle.

5. Réacteur de thermolyse selon l'une des revendications 1 à 4, **caractérisé en ce que** le dispositif de chauffage (12) a une structure en forme d'une grille.

6. Réacteur de thermolyse selon l'une des revendications 2 à 5, **caractérisé en ce que** le groupe d'éléments de chauffage (24) est réalisé en forme d'une plaque d'éléments de chauffage formée d'une seule pièce.

7. Réacteur de thermolyse selon l'une des revendications 2 à 6, **caractérisé en ce que** les éléments de chauffage (18) d'un groupe d'éléments de chauffage (24) sont connectés thermiquement et/(ou électriquement, en particulier d'une manière directe.

8. Réacteur de thermolyse selon l'une des revendications 4 à 7, **caractérisé en ce que** les plusieurs groupes d'éléments de chauffage (24), en particulier arrangés en parallèle, son connectés électriquement.

9. Réacteur de thermolyse selon l'une des revendications 1 à 8, **caractérisé en ce que** le dispositif de chauffage (12) comprend des creux d'alimentation (42) à la première côté (14) pour l'alimentation en urée sèche (10), lesdits creux s'étendant jusqu'à la deuxième côté (16) du dispositif de chauffage (12).

10. Réacteur de thermolyse selon l'une des revendications 1 à 9, **caractérisé en ce que** le dispositif de chauffage (12) comprend des creux de décharge à la deuxième côté (16) pour décharger de l'ammoniac et d'autres produits de thermolyse, lesdits creux de décharge étant connectés aux creux d'alimentation (42).

11. Réacteur de thermolyse selon l'une des revendications 1 à 10, **caractérisé par** un dispositif de transport pour transporter un fluide par lequel les produits de thermolyse peuvent être enlevées du dispositif de chauffage (12) à travers les creux de décharge.

12. Réacteur de thermolyse selon l'une des revendications 1 à 11, **caractérisé en ce que** la surface chauffée du dispositif de chauffage (12) comprend un agent catalytique pour accélérer la réaction de dissociation.

13. Réacteur de thermolyse selon l'une des revendications 1 à 12, **caractérisé en ce que** le dispositif de chauffage (12) comprend un revêtement et/ou un enrobage pour augmenter la rigidité chimique et/ou mécanique dus dispositif de chauffage (12).

14. Réacteur de thermolyse selon l'une des revendications 2 à 13, **caractérisé en ce que** le dispositif de chauffage (12) comprend des conducteurs électriques (36) s'étendant dans une troisième direction (38) perpendiculaire à la deuxième direction de projection (26) des groupes d'éléments de chauffage (24) et perpendiculaire à la première direction (40) des éléments de chauffage (18).

15. Réacteur de thermolyse selon l'une des revendications 1 à 14, **caractérisé par** un boîtier (44) avec une ouverture d'alimentation (46) pour l'alimentation en une matière solide (10) ainsi qu'une ouverture de décharge (48) pour décharger les produits de thermolyse.

16. Réacteur de thermolyse selon la revendication 2, **caractérisé en ce que** lesdits éléments de chauffage (18) connectés électriquement en parallèle sont formés par un groupe d'éléments de chauffage (24) en spirale.
